# DEMANDE DE BREVET EUROPEEN

(11) **EP 0 614 723 A1**
(43) Date de publication de la demande: **14.09.1994**
(21) Numéro de dépôt: 94400183.3
(22) Date de dépôt: 28.01.1994
(51) Int. Cl.: B23P 19/08

(54) **Dispositif et procédé de montage d'un ensemble de segments dans des gorges de réception portées par une tête de piston de moteur thermique**

(30) Priorité: 09.03.1993 FR 9302686
(71) Demandeur: RENAULT AUTOMATION, F-92109 Boulogne Billancourt (FR)
(72) Inventeur: Thurier, Yvan, F-94320 Thiais (FR)
(74) Mandataire: Ernst-Schonberg, Michel

(57) **Abrégé**

Système de montage d'un ensemble de segments dans des gorges de réception portées par une tête de piston de moteur thermique, dans lequel un moyen d'amenée et de centrage de l'ensemble de segments est associé à un dispositif de déformation radiale (58) et de maintien de ces derniers dans des supports coulissants montés (21, 22, 23) dans des plans parallèles des gorges de réception des segments, caractérisé par le fait qu'un support coulissant (21) porte des glissières (55) de guidage de cales d'espacement (57) de deux segments laminaires (52, 53), un moyen de commande (60) de déplacement des dites cales (57) par rapport au flanc d'un segment laminaire et une butée axiale (59) du flanc dudit segment mobile entre sa position d'appui sur les cales (57) et sa position de butée sur le support coulissant (21).

## Description

L'invention concerne un dispositif et un procédé de montage d'un ensemble de segments dans des gorges de réception portées par une tête de piston de moteur thermique, dans lequel un moyen d'amenée et de centrage de l'ensemble des segments est associé à des moyens de déformation radiale et de maintien de ces derniers dans des supports coulissants montés dans des plans parallèles des gorges de réception des segments.

La demande de brevet 92-02502 déposée au nom de la demanderesse décrit un dispositif dans lequel des supports en deux parties assurent le maintien de chaque segment et sont montés à coulissement dans des glissières superposées. Ces supports portent respectivement une surface arquée de maintien préalable du segment sous l'action d'un dispositif de déformation.

La publication FR-A-2360806 décrit un segment réalisé par deux lames. On positionne dans ce cas dans la gorge de réception portée par le piston, un anneau expandeur qui se présente sous la forme d'un ressort annulaire qui possède une paroi verticale et des ailes horizontales aux extrémités desquelles sont disposés des épaulements de butée des lames constitutives du segment.

L'invention concerne plus particulièrement un système de montage d'un segment composé de deux lames respectivement entre le flanc d'une gorge de réception et une aile horizontale de l'anneau expandeur préalablement monté dans ladite gorge.

L'invention concerne également un procédé de mise en oeuvre du système selon lequel on monte successivement deux segments laminaires sur un même support coulissant préalablement à la pose simultanée des divers segments sur la tête de piston.

Selon l'invention, le support coulissant porte des glissières de guidage de cales d'espacement des deux segments laminaires, un moyen de commande de déplacement des dites cales par rapport au flanc d'un segment laminaire et une butée axiale du flanc dudit segment, ce dernier étant mobile entre sa position initiale d'appui sur les cales et sa position finale de butée sur le support coulissant de maintien.

Le système ainsi réalisé assure un chargement rapide de l'ensemble des segments sans incidence notable sur la cadence de montage des segments sur les pistons.

D'autres caractéristiques et avantages de l'invention ressortiront de la description d'un exemple de réalisation du dispositif faite en référence aux dessins annexés dans lesquels :
- la figure 1 est une vue en plan des moyens d'amenée et de centrage des segments,
- la figure 2 est une coupe partielle simplifiée du détail de réalisation des moyens d'amenée et de centrage des segments,
- la figure 3 est une vue en coupe partielle du support coulissant des segments laminaires représenté en position de repos,
- la figure 4 est une vue en coupe partielle du support coulissant représenté à la figure 3 en position de chargement du premier segment laminaire,
- la figure 5 est une vue en coupe partielle du support coulissant représenté à la figure 3 en position d'effacement de la cale d'espacement des segments laminaires,
- la figure 6 est une vue en coupe partielle du support coulissant représenté à la figure 3 en position de chargement du deuxième segment laminaire.

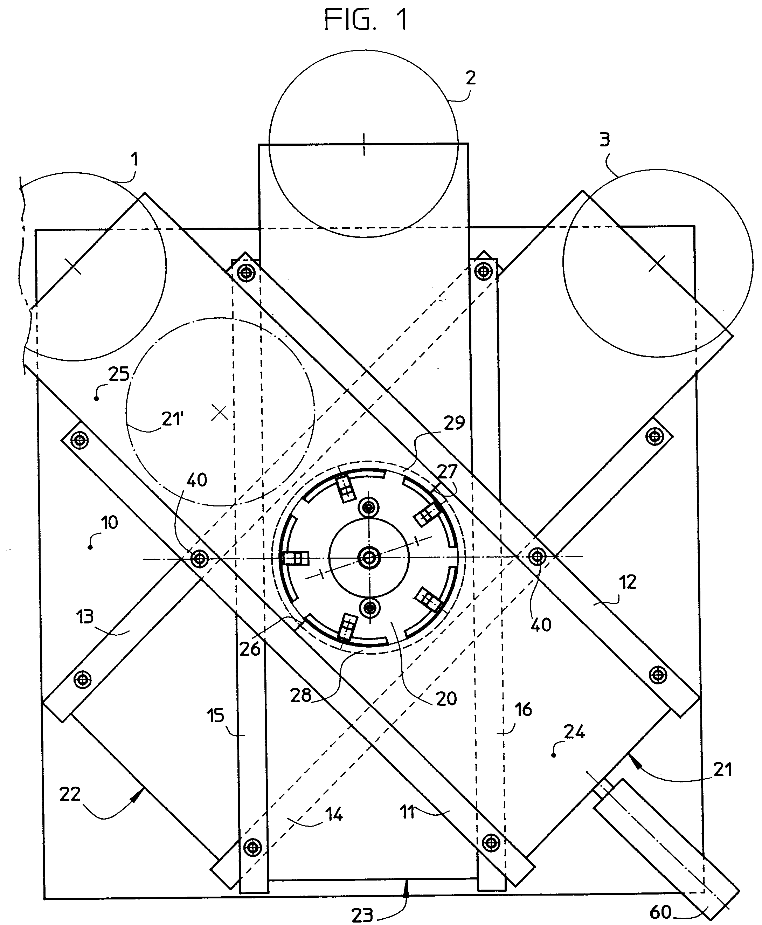

La figure 1 montre un système de montage d'un ensemble de trois segments à partir de cylindres de stockage 1, 2, 3.

Le système de montage des segments comporte un bâti 10 sur lequel sont superposés trois jeux de glissières fixes parallèles deux à deux, 11 et 12, 13 et 14, 15 et 16 dans des plans parallèles. Les glissières 11, 12 et 14, 13 sont disposées de part et d'autre des glissières 15, 16 suivant une répartition angulaire à 45°. Le centre du bâti 10 possède une ouverture circulaire 20 par laquelle est introduit le piston 4 pour la pose des divers segments à partir de leurs cylindres de stockage 1, 2, 3.

A cet effet les glissières assurent le positionnement et la mobilité de supports 21, 22, 23 d'amenée des segments.

Les supports coulissants superposés 22 et 23 sont sensiblement identiques et possèdent la même fonction telle que décrite dans la demande de brevet 92-02502. Pour simplifier la description, nous décrirons le support 21 qui possède la fonction nouvelle de chargement de deux segments laminaires.

Le support 21 possède ainsi deux tiroirs 24, 25 à face avant jointives en 26, 27. Chaque tiroir 24, 25 porte une surface de support sensiblement semi-circulaire 28, 29 conformée au segment concerné. Ces surfaces 28, 29 forment lorsque les tiroirs sont accolés un lamage circulaire qui reçoit le segment laminaire fendu. Chaque surface semi-circulaire 28, 29 est de dimension légèrement supérieure au diamètre du segment libre, de façon à permettre son changement de position. Les deux tiroirs sont actionnés par deux vérins alternatifs indépendants et à plusieurs courses non représentés. Ces vérins sans tige sont placés sous la table 10 et transmettent leur mouvement au moyen d'un doigt au travers d'un orifice oblong ménagé dans ladite table 10.

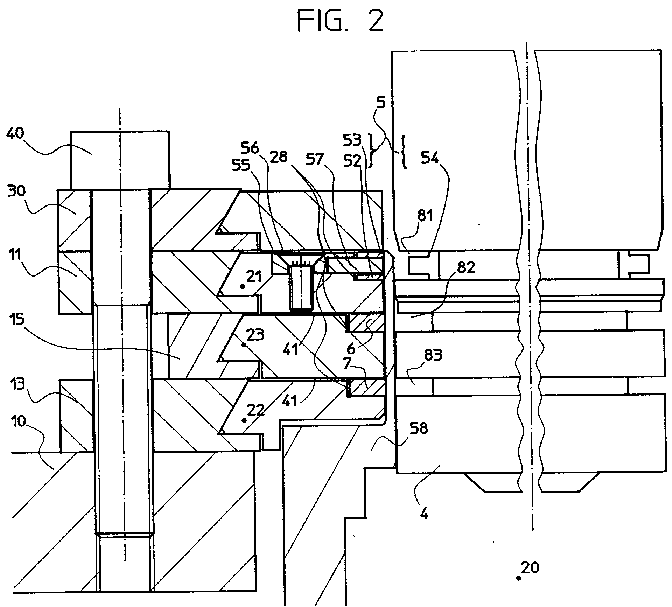

La figure 2 représente les glissières superposées 11, 15, 13 à queues d'aronde, fixées par les vis 40 sur le bâti 10. L'épaisseur des glissières 11, 15, 13 est supérieure à l'épaisseur des supports 21, 23, 22 et assure un jeu 41 de coulissement entre les supports coulissants 21, 23, 22 afin de permettre leur déplacement. Le jeu de segments 5, 6, 7 est maintenu dans les lamages circulaires respectifs formés par les surfaces semi-circulaires 28, 29 des supports coulissants 21, 23, 22 en correspondance des plans des gorges 81, 82, 83 du piston 4, par les doigts arqués 58 d'un dispositif de déformation radiale et de maintien des segments dans les supports 21, 23, 22.

L'ensemble des glissières 11, 15, 13 est maintenu par les vis 40 entre une plaque de voûte 30 et la table 10.

Le support 21 à deux tiroirs 24, 25 est monté à coulissement dans les glissières 11, 12 à l'aide des vérins non représentés qui assurent le prélèvement successif sur le cylindre de stockage 1, des segments laminaires 52, 53 qui constituent conjointement avec l'anneau expandeur 54 préalablement placé dans la gorge 81 un segment racleur 5.

A cet effet, l'ensemble des tiroirs 24, 25 est déplacé en direction du cylindre 1 dans le but de favoriser le chargement du premier segment laminaire 52.

A cet effet, chaque tiroir 24 et 25 du support. 21 porte une glissière de guidage 55 rapportée au moyen de vis 56. Les glissières de guidage 55 ne se raccordent pas à l'exemple des tiroirs 24, 25 le long des faces avant 26, 27. Une cale d'espacement 57 des segments laminaires 52, 53 est montée à mobilité relative dans la glissière 55 correspondante du tiroir 24 ou 25 à l'aide d'un actionneur à câble 60.

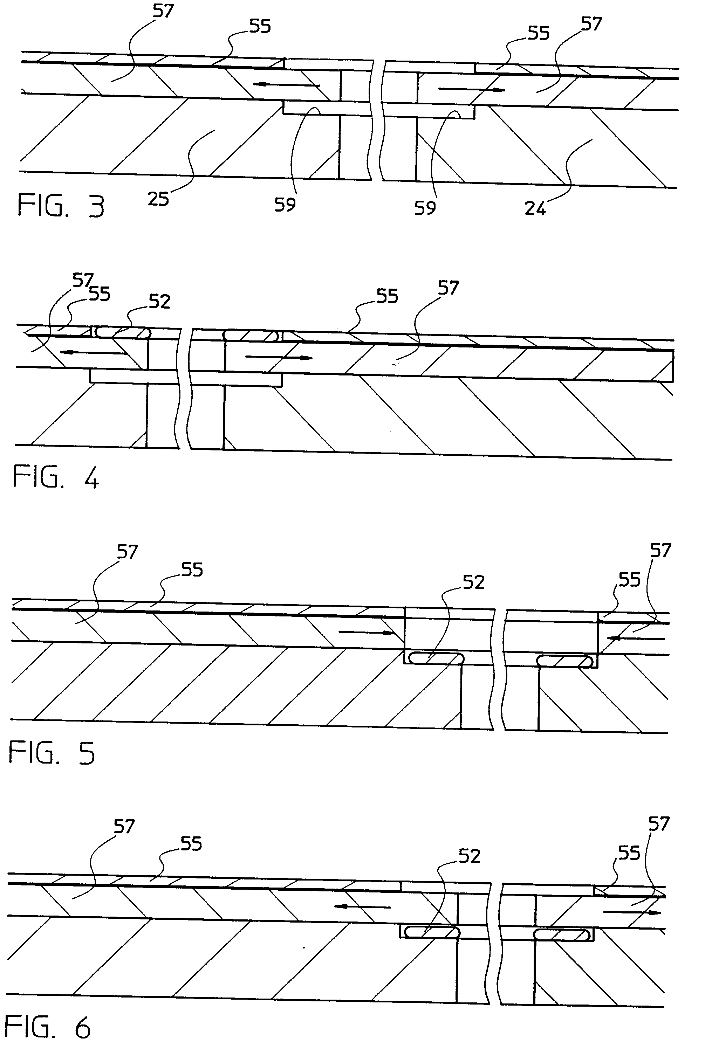

La cale 57 délimite de la sorte d'une part avec la voûte 30 et d'autre part avec le fond d'un lamage 59 du support 21 deux logements des segments laminaires 52, 53 ainsi que cela est représenté à la figure 3.

Le fond de lamage 59 constitue de la sorte une butée axiale du segment laminaire 52.

On décrira ci-après le procédé de mise en oeuvre du système ainsi que cela ressort des figures 1, 3, 4, 5, 6.

La figure 1 montre en traits mixtes une position intermédiaire du support 21 à partir de laquelle s'opère le chargement des segments laminaires.

Les tiroirs 24, 25 du support coulissant sont amenés à partir de la position de repos représentée à la figure 3 à la position de réception d'un premier segment laminaire 52 sous le cylindre de stockage 1.

La figure 4 illustre la progression du support 21 et du segment laminaire 52 posé sur les cales 57 en direction d'une position intermédiaire représentée en 21' à la figure 1. Dans cette position, les actionneurs déplacent les cales 57 par rapport au flanc du segment 52 ainsi que cela est montré à la figure 4.

Le segment 52 non soutenu par la cale 57 se déplace alors vers sa position de butée au contact du fond du lamage 59. Les actionneurs 60 replacent ensuite les cales 57 au dessus du segment 52 comme représenté à la figure 6 pour permettre la réception du deuxième segment laminaire 53. Le support 21 peut alors être ramené au contact du cylindre de stockage 1.

L'ensemble des segments 52, 53 le support 21 et les cales 57 sont alors déplacés dans la position définitive centrée sur le piston 4 en vue du montage simultané du jeu de segments 52, 53 6 et 7 dans les gorges 81, 82, 83 du piston 4.

## Revendications

**1)** Système de montage d'un ensemble de segments dans des gorges de réception portées par une tête de piston de moteur thermique, dans lequel un moyen d'amenée et de centrage de l'ensemble de segments est associé à un dispositif de déformation radiale (58) et de maintien de ces derniers dans des supports coulissants montés (21, 22, 23) dans des plans parallèles des gorges de réception des segments, caractérisé par le fait qu'un support coulissant (21) porte des glissières (55) de guidage de cales d'espacement (57) de deux segments laminaires (52, 53), un moyen de commande (60) de déplacement des dites cales (57) par rapport au flanc d'un segment laminaire et une butée axiale (59) du flanc dudit segment mobile entre sa position d'appui sur les cales (57) et sa position de butée sur le support coulissant (21).

**2)** Système de montage selon la revendication 1, caractérisé par le fait que le dispositif de déformation radiale et de maintien des segments laminaires possède une pluralité de doigts (58) mobiles à fonction de centrage du segment laminaire au cours de son déplacement axial.

**3)** Procédé de mise en oeuvre du système de montage selon l'une quelconque des revendications 1 ou 2, caractérisé par le fait que le support coulissant (21) des segments laminaires est monté à mobilité dans une première phase, entre une position de réception d'un premier segment (52), et une position intermédiaire (21') en correspondance avec la position déplacée des cales (57) d'espacement et d'un déplacement vertical dudit premier segment vers sa butée axiale (59) et, dans une deuxième phase, entre une position de réception d'un deuxième segment (53), et une position de montage de l'ensemble des segments (52, 53) dans une gorge de réception (81) portée par la tête de piston.
